# EUROPÄISCHE PATENTSCHRIFT

(11) **EP 2 639 942 B1**
(45) Veröffentlichungstag und Bekanntmachung des Hinweises auf die Patenterteilung: **15.07.2015**
(21) Anmeldenummer: 12159130.9
(22) Anmeldetag: 12.03.2012
(51) Int. Cl.: H02K 11/00

(54) **Befestigungsvorrichtung zur Anbringung insbesondere an Lüftungsgittern**
Fixing device for attaching in particular to ventilation meshes
Dispositif de fixation destiné à l'application, notamment sur des grilles d'aération

(43) Veröffentlichungstag der Anmeldung: 18.09.2013
(73) Patentinhaber: Baumer Hübner GmbH, 10589 Berlin (DE)
(72) Erfinder: Otto, Kai-Hans, 12526 Berlin (DE); Lablack, Edgar, 12163 Berlin (DE)
(74) Vertreter: Strauss, Steffen

(56) Entgegenhaltungen:
- EP-A2- 0 746 081
- DE-A1-102008 059 092
- DE-U1- 8 603 471
- DE-U1- 29 920 785

## Beschreibung

Die Erfindung betrifft eine Befestigungsvorrichtung zur Anbringung eines eine Drehbewegung um eine Drehachse überwachenden Geräts an einem Elektromotor, insbesondere dessen Lüftungsgitter, mit einem am Gerät befestigbar ausgestalteten Flanschelement, und mit einem am Elektromotor befestigbar ausgestalteten Befestigungselement, wobei das Flanschelement und das Befestigungselement über Gelenkstellen bezüglich der Drehbewegung starr und senkrecht zur Drehachse relativ zueinander auslenkbar verbunden sind.

Zur Überwachung der Drehbewegung von Elektromotoren werden beispielsweise Drehgeber oder Tachogeneratoren eingesetzt. Diese Geräte liefern Daten, aus denen auf die Drehgeschwindigkeit und/oder die Drehposition einer Antriebswelle des Elektromotors geschlossen werden kann. Die Daten werden zur Steuerung oder Regelung der Motorgeschwindigkeit oder zum genauen Anfahren bestimmter Positionen benutzt.

Die Geräte werden üblicherweise an einer B-Seite des Elektromotors mit einer dort verfügbaren Motorwelle gekoppelt. Die B-Seite befindet sich meist auf der von der Antriebswelle abgewandten Seite des Elektromotors. Dort befinden sich oft auch Bremsen, Lüfter oder andere Strömungsquellen für Kühlmedien des Motors.

Die Befestigungsvorrichtung dient sowohl zur Anbringung des Geräts als auch als Drehmomentstütze, die verhindert, dass sich ein Gehäuse des Geräts mit der Welle mitdrehen kann.

Derartige Befestigungsvorrichtungen müssen eine hohe Drehsteifigkeit aufweisen. Mit zunehmender Drehsteifigkeit der Befestigungsvorrichtung werden nämlich torsionale Eigenschwingungen des Geräts in höhere Frequenzbereiche verschoben, bis sie oberhalb der Frequenzbereiche liegen, in denen eine Steuerung oder Regelung des Elektromotors stattfindet. Die hochfrequenten Eigenschwingungen der Befestigungsvorrichtung können dann die niederfrequentere Steuerung und Regelung des zu überwachenden Elektromotors kaum noch oder nicht mehr beeinflussen. Des Weiteren besteht die Notwendigkeit, in meist definierten Zyklen eine Revision der B-Seite des Motors und / oder der Bremse durchzuführen. Dazu müsste üblicherweise der Drehgeber oder Tacho demontiert werden, um die Lüfterhaube von der B-Seite abziehen zu können.

Gleichzeitig müssen die Befestigungsvorrichtungen einen toleranzbedingten Versatz der Achsen des Geräts und des Elektromotors ausgleichen können und somit eine ausreichende Auslenkbarkeit in Richtung senkrecht zur Drehachse aufweisen.

Eine Befestigungsvorrichtung mit den eingangs genannten Merkmalen ist beispielsweise aus der EP 2 113 989 B1 bekannt. Aufgrund der unter Vorspannung stehenden Metallfederbögen ist jedoch die Montage des Geräts am Lüftungsgitter aufwändig.

Die Befestigungsvorrichtung der DE 299 20 785 U1 weist einen Federbügel in Form eines Auslegearmes auf. Eine ausreichende Drehsteifigkeit für die mittlerweile sehr hochfrequenten Motorsteuerungen ist bei dieser Ausgestaltung nur mit einem sehr hohen konstruktiven Aufwand zu realisieren.

Die Vorrichtung der DE 10 2008 059 092 A1 weist ebenfalls einen Federbügel auf, der zur Befestigung eines Drehgebers am Lüftungsgitter eines Elektromotors geeignet ist. Der Federbügel besitzt eine hohe Drehsteifigkeit bei gleichzeitig hoher axialer Elastizität.

Der Erfindung liegt folglich die Aufgabe zugrunde, die Torsionssteifigkeit der eingangs genannten Befestigungsvorrichtung bei gleichzeitig guter Auslenkbarkeit quer zur Drehachse so zu verbessern, dass sie auch für die modernen Steuerungen von Elektromotoren mit einer hohen Steuer- oder Regelfrequenz geeignet ist und eine Revision der B-Seite des Motors ohne eine Demontage des Drehgebers / Tachos zu ermöglichen.

Diese Aufgabe wird erfindungsgemäß für die eingangs genannte Befestigungsvorrichtung dadurch gelöst, dass die Befestigungsvorrichtung ein am Gerät befestigbar ausgestaltetes Flanschelement und ein am Elektromotor bzw. dessen Lüftungsgitter anbringbar ausgestaltetes Befestigungselement mit mindestens einem kraftschlüssigen Befestigungsmittel aufweist. Das Flanschelement und das Befestigungselement sind bezüglich der Drehbewegung starr und senkrecht zur Drehachse relativ zueinander auslenkbar über Gelenkstellen miteinander verbunden. Das Befestigungselement weist wenigstens ein Befestigungsmittel auf, welches in eine Öffnung des Lüftungsgitters einsteckbar und kraftschlüssig mit dem Lüftungsgitter in Eingriff bringbar ist. Ferner kann im montierten Zustand das Lüftungsgitter zwischen der Befestigungsvorrichtung und dem Gerät angeordnet sein, so dass das Lüftungsgitter auch dann abgezogen werden kann, wenn die Befestigungsvorrichtung und das Gerät am Elektromotor verbleiben.

Die erfindungsgemäße Lösung kann durch die folgenden jeweils für sich vorteilhaften und beliebig miteinander kombinierbaren Ausgestaltungen weiter verbessert werden.

In einer ersten vorteilhaften Ausgestaltung ist das Flanschelement an dem Befestigungselement über die Gelenkstellen kardanisch aufgehängt.

Durch die kardanische, also kreuzweise Anordnung der Gelenkstellen, wird eine gute Auslenkbarkeit des Flanschelements gegenüber dem Befestigungselement bei hoher Drehsteifigkeit erzielt.

Gemäß einer weiteren vorteilhaften Ausgestaltung kann das Flanschelement gegenüber dem Befestigungselement durch die Gelenkstellen translatorisch, vorzugsweise rein translatorisch geführt sein. Eine solche Führung erlaubt den Ausgleich eines Versatzes der Wellen von Elektromotor und Überwachungsgerät, ohne dass die Wellen bei einer Auslenkung gegeneinander verkippen.

Das Befestigungsmittel ist vorteilhafter Weise einstückig als Befestigungselement ausgeführt. Eine derartige Ausführung erlaubt eine hohe Positioniergenauigkeit einzelner Befestigungsmittel zueinander und in Bezug zu den Öffnungen im Lüftergitter.

Die Ausgestaltung eines Spreizteils in elliptischer Geometrie, erlaubt ein Aufspreizen des Klemmorgans und bewirkt somit eine spielfreie Befestigung des Befestigungselements mit dem Lüftergitter.

Eine parallele Auslenkung von Flanschelement und Befestigungselement relativ zueinander lässt sich beispielsweise erreichen, wenn wenigstens ein Paar von Gelenkstellen eine Parallelfederführung bildet oder sogar bevorzugt sämtliche Paare von Gelenkstellen Parallelfederführungen bilden. Die Enden der Federn der Parallelfederführungen können in einer senkrecht oder in einer parallel zur Drehachse liegenden Ebene voneinander beabstandet sein. Die Federn oder Stege der Parallelführungen können sich unabhängig davon ebenfalls in diesen Ebenen erstrecken.

Zur Bildung der kardanischen Struktur können die Parallelfederführungen insbesondere kreuzweise versetzt zueinander angeordnet sein, wobei die Federnpaare die Auslenkbarkeit jeweils in senkrecht zueinander liegenden Richtungen sicherstellen. Zwischen den kreuzweise angeordneten Parallelführungen kann ein weiteres Bauteil, beispielsweise ein Zwischenrahmen, angeordnet sein.

Die Gelenkstellen können einstückiger Teil des Flanschelements und/oder des Befestigungselements sein. Insbesondere kann die gesamte Befestigungsvorrichtung mitsamt Flanschelement und Befestigungselement sowie den Gelenkstellen einstückig gefertigt sein. Beispielsweise kann die Befestigungsvorrichtung in einem Gussverfahren, insbesondere einem Spritzgussverfahren hergestellt sein. Hierfür eignen sich insbesondere Kunststoff- oder Metallwerkstoffe. Des Weiteren ist die Herstellung in einem Stück auch als Stanz- und/oder Biegeteil möglich.

Eine einfache und kostengünstige Fertigung ist möglich, wenn die Gelenkstellen wenigstens ein Filmscharnier als Gelenk aufweisen. Ein solches Filmscharnier lässt sich insbesondere bei der Herstellung der Gelenkstellen und/oder der gesamten Befestigungsvorrichtung im Guss- oder Spritzgussverfahren fertigen. Gelenke können auch von den Knick- oder Biegestellen eines Biegeteils gebildet sein.

Um hohen Anforderungen der elektromagnetischen Verträglichkeit zu genügen, ist es von Vorteil, wenn über die Befestigungsvorrichtung eine elektrisch leitende Verbindung zwischen dem Elektromotor und dem Gerät hergestellt werden kann. Dies lässt sich gemäß einer weiteren vorteilhaften Ausgestaltung dadurch erreichen, dass das Flanschelement und das Befestigungselement elektrisch leitend miteinander verbunden sind. Insbesondere können eine Flanschfläche des Flanschelements, die bei angebrachtem Gerät an dessen Montagefläche anliegt, und eine Befestigungsfläche des Befestigungselements, die bei montierter Befestigungsvorrichtung am Elektromotor anliegt, elektrisch leitend miteinander verbunden sein. Am einfachsten lässt sich dies erreichen, wenn die Befestigungsvorrichtung aus einem elektrisch leitenden Werkstoff, beispielsweise einem elektrisch leitenden Kunststoff oder einem Metallwerkstoff gefertigt ist. Die Befestigungsvorrichtung kann jedoch auch aus einem nichtleitenden Werkstoff, wie beispielsweise einem Kunststoff, gefertigt sein, der metallisiert ist, mit einer elektrisch leitenden Beschichtung und/oder mit eingebetteten Leitungselementen versehen ist. Die elektrische Verbindung zwischen Flanschelement und Befestigungselement kann insbesondere durch die Gelenkstellen erfolgen.

Zur Versteifung der Befestigungsvorrichtung kann zwischen dem Flanschelement und dem Befestigungselement ein Zwischenrahmen angeordnet sein, der über die Gelenkstellen mit dem Flanschelement und dem Befestigungselement verbunden ist. Durch den rahmenartigen Aufbau des Zwischenrahmens werden die Gelenkkräfte der kardanisch angeordneten Gelenkstellen verteilt und Torsionskräfte gut aufgenommen. Insbesondere führt der rahmenartige Aufbau zu einer hohen Torsionssteifigkeit, was zu sehr hochfrequenten Eigenschwingungen führt.

Am Zwischenrahmen können insbesondere die flanschelementseitigen Gelenkstellen gegenüber den befestigungselementseitigen Gelenkstellen um 90° versetzt angeordnet sein. An Zwischenrahmen können die Gelenkstellen in unterschiedlichen Ebenen angreifen.

Vorzugsweise kann der Zwischenrahmen eine Ebene aufspannen, die zwischen einer Flanschfläche des Flanschelements und einer Befestigungsfläche des Befestigungselements liegt. Diese Anordnung führt zu einem kompakten Aufbau der Befestigungseinrichtung.

Ein kompakter Aufbau kann ferner erreicht werden, wenn das Flanschelement innerhalb des Zwischenrahmens angeordnet ist.

Der Zwischenrahmen kann um die Drehachse herum geschlossen bzw. durchgängig sein, um Torsionskräfte besser aufnehmen und an die Gelenkstellen verteilen zu können.

Um die Befestigungsvorrichtung am Elektromotor, insbesondere dessen Lüftungsgitter, zu befestigen, kann das Befestigungselement wenigstens ein Befestigungsmittel, insbesondere ein Klemmorgan aufweisen. Das Klemmorgan kann von einer Einführstellung in eine Klemmstellung überführbar ausgestaltet sein. In der Einführstellung kann das Klemmorgan entlang einer Einsteckrichtung, die beispielsweise parallel zur Drehachse verläuft, in eine Öffnung des Lüftungsgitters einsteckbar sein. In der Klemmstellung kann eine senkrecht zur Steckrichtung gemessene Breitenabmessung des Klemmorgans gegenüber der Einsteckstellung vergrößert sein.

Die Vergrößerung der Breitenabmessung kann beispielsweise durch ein Aufspreizen des Klemmorgans bewirkt werden. Durch ein solches Aufspreizen stützt sich das Klemmorgan kraftschlüssig am Lüftungsgitter ab. Das Klemmorgan kann vollständig durch das Lüftungsgitter gesteckt werden.

Am freien Ende des Klemmorgans kann nach einer weiteren Ausgestaltung auch ein exzentrischer Klemmkopf aus der Einsteck- in die Klemmstellung bewegt, insbesondere gedreht werden. In der Klemmstellung kann der Klemmkopf die Gitterstege des Lüftungsgitters überlappen, so dass das Klemmorgan nicht mehr herausgezogen werden kann. Bei dieser Ausgestaltung wird die Breitenabmessung durch die Drehung des Klemmkopfes vergrößert. Der Klemmkopf kann sich an einer Stirnfläche des Lüftungsgitters abstützen, indem er beispielsweise an seiner dem Lüftungsgitter zugewandten Unterseite mit einem Klemmvorsprung versehen ist, der in der Klemmstellung gegen eine Stirnfläche des Lüftungsgitters drückt.

Zum Einspreizen in das Lüftungsgitter kann das Klemmorgan zwei relativ zueinander bewegliche Spreizteile aufweisen. Beispielsweise kann das Klemmorgan ein in zwei oder mehr seitlich auseinanderspreizbare Teile unterteilter Vorsprung sein. Das Klemmorgan kann ferner mit einem Spreizorgan versehen sein, durch das in der Klemmstellung die Spreizteile auseinandergedrückt sind. Um das Spreizorgan nicht bei der Montage der Befestigungsvorrichtung zu verlieren, kann es zumindest in der Einsteckstellung unverlierbar an bzw. in der Befestigungsvorrichtung gehalten sein.

Um zu Wartungszwecken das Lüftungsgitter vom Elektromotor abnehmen zu können, ohne vorher das Gerät mitsamt der Befestigungsvorrichtung demontieren zu müssen, ist die Befestigungsvorrichtung vorzugsweise so ausgestaltet, dass das Lüftungsgitter zwischen Gerät und Befestigungsvorrichtung liegt. Das Lüftungsgitter kann somit nach Lösen der Befestigungselemente einfach über das Gerät gezogen werden, während das Gerät und die Befestigungsvorrichtung auf der Motorwelle verbleiben können.

Dies wird beispielsweise dadurch ermöglicht, dass das Klemmorgan von der Flanschfläche, also der Seite des Drehgebers aus, betätigbar ist, wie oben bereits ausgeführt ist.

Das Lüftungsgitter kann ferner zwischen Gerät und Befestigungsvorrichtung zu liegen kommen, wenn das Klemmorgan in Richtung der Flanschfläche vorspringt. An der Flanschfläche liegt im montierten Zustand das Gerät zur Überwachung der Drehbewegung an. Die Einsteckrichtung weist bei dieser Ausgestaltung zum Drehgeber hin, so dass das Lüftungsgitter automatisch zwischen Befestigungsvorrichtung und Drehgeber zu liegen kommt.

Um die Belüftung des Elektromotors nicht zu beeinträchtigen, ist die Befestigungsvorrichtung mit Durchbrüchen versehen, durch die Kühl- oder Abluft strömen kann. Ferner kann um den Zwischenrahmen zum Flanschelement und/oder zum Befestigungselement ein Lüftungsspalt vorgesehen sein. Um den Lüftungsstrom nicht zu blockieren, sind bevorzugt wenigstens 20 % der von der Befestigungsvorrichtung eingenommenen Grundfläche mit Durchbrüchen versehen.

Um die Durchströmung der Befestigungsvorrichtung mit Kühlluft zu erleichtern, können Flanschelement, Befestigungselement und, soweit vorhanden, Zwischenrahmen in Richtung der Motorwelle durch Lüftungsspalten voneinander beabstandet sein, so dass eine senkrecht zur Motorwelle gerichtete Durchströmung stattfinden kann.

Die Erfindung umfasst auch eine Anordnung mit einem Lüftungsgitter, einem Gerät zur Überwachung einer Drehbewegung und einer Befestigungsvorrichtung, durch die das Gerät am Lüftungsgitter befestigbar ist, wobei die Befestigungsvorrichtung an der dem Gerät abgewandten Seite des Lüftungsgitters anbringbar ausgestaltet ist.

Mit dem Lüftungsgitter in Eingriff bringbare Befestigungsmittel sind vorzugsweise von der Seite des Geräts aus betätigbar ausgestaltet. Sie können sich insbesondere, wie oben dargelegt, kraftschlüssig am Lüftungsgitter abstützen.

Die Befestigungsmittel können Betätigungsorgane, wie beispielsweise das oben genannte Spreizorgan, aufweisen, deren Betätigung den Kraftschluss herbeiführt. Derartige Betätigungsorgane können beispielsweise die oben genannten Spreizorgane sein.

Die Befestigungsmittel sind bevorzugt mitsamt den Betätigungsorganen in das Lüftungsgitter ein- und/oder durchsteckbar ausgestaltet.

Im Folgenden ist die Erfindung anhand von unterschiedlichen Ausführungsformen und mit Bezug auf die beigefügten Zeichnungen beispielhaft erläutert. Nach Maßgabe der obigen Ausführungen können die bei den einzelnen Ausführungsformen unterschiedlichen Merkmale beliebig miteinander kombiniert werden. Außerdem kann bei speziellen Anwendungen auf Merkmale der Ausführungsformen verzichtet werden, soweit es bei der Anwendung auf den mit diesem Merkmal verknüpften, oben beschriebenen Vorteil nicht ankommt.

In den Figuren und der folgenden Beschreibung sind für Elemente, die sich in Funktion und/oder Aufbau entsprechen, dieselben Bezugszeichen verwendet. Bei den unterschiedlichen Ausführungsformen ist der Kürze halber lediglich auf Unterschiede eingegangen.

Es zeigen:
- Fig. 1: eine schematische Perspektivdarstellung einer Anordnung mit einem Lüftungsgerät, einer Befestigungsvorrichtung und einem Gerät zu einer Überwachung einer Drehbewegung;
- Fig. 2: eine schematische Perspektivdarstellung einer Ausführungsform einer erfindungsgemäßen Befestigungsvorrichtung;
- Fig. 3: eine schematische Perspektivdarstellung einer zweiten Ausführungsform einer erfindungsgemäßen Befestigungsvorrichtung;
- Fig. 4: eine schematische Perspektivdarstellung einer dritten Ausführungsform einer erfindungsgemäßen Befestigungsvorrichtung.

Die Anordnung 1 weist ein Lüftungsgitter 2, ein Gerät 3 zur Überwachung der Drehbewegung einer Welle sowie eine Befestigungsvorrichtung 4 auf, mit der das Gerät 3 am Lüftungsgitter 2 befestigt werden kann.

Das dargestellte Lüftungsgitter 2 ist insbesondere das Lüftungsgitter eines Elektromotors (nicht dargestellt). Das Gerät 3 dient dazu, die Drehbewegung des Elektromotors zu erfassen, wozu es mit einer Motorwelle (nicht dargestellt) über eine nicht dargestellte Kupplung verbunden werden kann.

Die Befestigungsvorrichtung 4 dient sowohl zur Befestigung des Geräts 3 am Lüftungsgitter 2 als auch als Drehmomentstütze, um ein Gehäuse 5 des Geräts 3, insbesondere dessen Stirnplatte 6 drehstarr mit dem Lüftungsgitter 2 zu verbinden. Als Gerät 3 kommt beispielsweise ein Drehgeber oder ein Tachogenerator zum Einsatz.

Die Stirnplatte 6 des Geräts 3 ist flanschförmig ausgestaltet und dient zur Befestigung beispielsweise an der Befestigungsvorrichtung 4. Die Anschlussmaße der Stirnplatte 6 sind meist genormt, so dass unterschiedliche Geräte 3 gegeneinander ausgetauscht werden können.

Die Befestigungsvorrichtung 4 ist vorzugsweise so angeordnet, dass sich das Lüftungsgitter 2 zwischen der Befestigungsvorrichtung 4 und dem Gerät 3 befindet. Die Befestigungsvorrichtung 4 ist also von der dem Gerät 3 gegenüberliegenden Seite des Lüftungsgitters 2 an diesem befestigt.

Neben den Lüftungsöffnungen (nicht dargestellt) des Lüftungsgitters 2, die der Be- und/oder Entlüftung des Elektromotors dienen, ist eine zentrale Öffnung 7 vorhanden, durch die auch die Motorwelle ragt. Die Außenkontur des Geräts 3 liegt im Schatten der Innenkontur der zentralen Öffnung 7, so dass das Lüftungsgitter über das Gerät 3 geschoben werden kann.

Die Befestigungsvorrichtung 4 ist mit Befestigungsmitteln 8 versehen, mittels denen die Befestigungsvorrichtung 4 am Lüftungsgitter 2 befestigt ist.

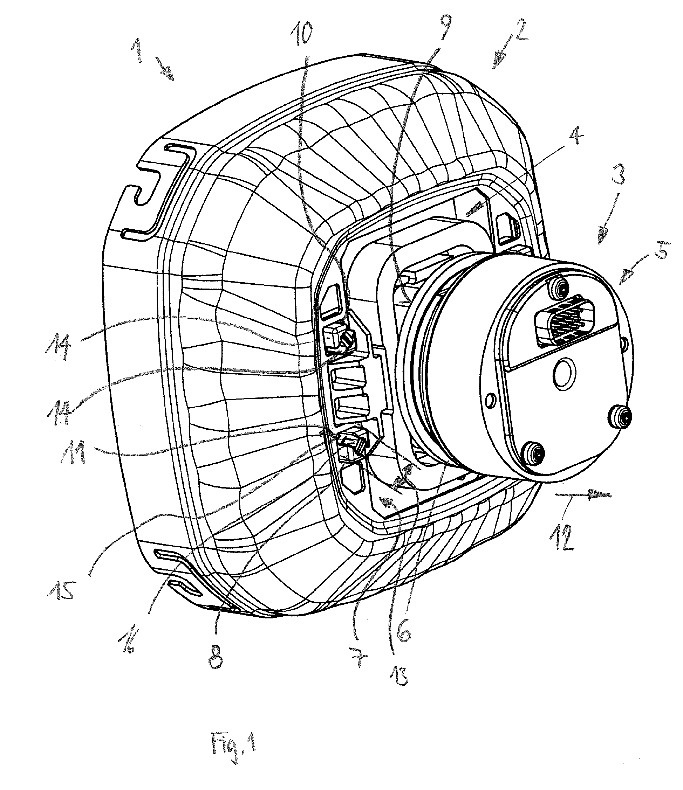

Wie Fig. 1 zeigt, können die Befestigungsmittel 8 in Richtung einer Flanschfläche 9 vorspringen, an der das Gerät 3 und die Befestigungsvorrichtung 4 aneinanderliegen. Die Befestigungsmittel 8 sind in einer Einsteckstellung in Öffnungen 10 des Lüftungsgitters 2 ein- bzw. durch diese Öffnungen durchsteckbar ausgestaltet. In der in Fig. 1 dargestellten Klemmstellung stützen sich die Befestigungsmittel 8 vorzugsweise kraftschlüssig am Lüftungsgitter 2 ab. In der Klemmstellung ist hierbei eine quer zu einer Einsteckrichtung 12 liegende Breitenabmessung 13 gegenüber der Einsteckstellung vergrößert. Dies erfolgt beispielsweise durch Aufspreizen des Befestigungsmittels 8, so dass sich das Befestigungsmittel 8 in der Öffnung 10 des Lüftungsgitters festklemmt.

Zum Aufspreizen kann das Befestigungsmittel 8 mit zwei oder mehr relativ zueinander insbesondere elastisch beweglichen Spreizteilen 14 versehen sein. Um die kraftschlüssige Verbindung zwischen Lüftungsgitter 2 und Befestigungsvorrichtung 4 herzustellen, kann ein Betätigungsorgan 15 vorgesehen sein, das von der der Flanschfläche 9 zugewandten Seite aus bedienbar angeordnet ist. Beispielsweise weist das Betätigungsorgan 15 eine zu einem Standardwerkzeug, wie einem Schraubendreher, komplementäre Ausgestaltung ähnlich einem Schraubenkopf auf. Das Betätigungsorgan 15 kann verliersicher in der Befestigungsvorrichtung 4 gehalten sein, so dass es zusammen mit der Befestigungsvorrichtung durch die Öffnung 10 gesteckt werden kann. Denkbar ist beispielsweise eine drehbare Rastverrastung des Betätigungsorgans 15 im Befestigungsmittel 8.

Das Betätigungsorgan 15 kann insbesondere in Form eines Spreizorgans 16 ausgestaltet sein, durch dessen Betätigung das Klemmorgan 11 aufgespreizt wird. Beispielsweise kann das Spreizorgan 16 einen nicht-kreisförmigen Querschnitt aufweisen, der bei Drehung die Spreizteile 14 auseinanderdrückt. Wie Fig. 1 zeigt, kann das Spreizorgan 16 quer zur Einsteckrichtung einen Querschnitt in Form eines Zweiflachs oder einer Ellipse aufweisen.

Zur Montage wird die Befestigungsvorrichtung 4 von der geräteabgewandten Seite in Einsteckrichtung 12 in das vom Elektromotor abgenommene Lüftungsgitter 2 so eingesetzt, dass die Befestigungsmittel 8 in die entsprechenden Öffnungen 10 einfahren. Anschließend werden die Betätigungsorgane 15 betätigt und somit die Befestigungsvorrichtung 4 am Lüftungsgitter 2 befestigt. Anschließend kann das Lüftungsgitter 2 mitsamt der Befestigungsvorrichtung 4 wieder am Elektromotor befestigt werden. Das Gerät 3 kann schließlich mit einer Kupplung (nicht gezeigt) an der Motorwelle (nicht gezeigt) und der Befestigungsvorrichtung 4 befestigt werden. Natürlich kann die Befestigungsvorrichtung 4 auch mit bereits darauf vormontiertem Gerät 3 an dem Lüftungsgitter 2 angebracht werden.

Muss das Lüftungsgitter 2 zu Wartungszwecken entfernt werden, so reicht es aus, die Befestigungsmittel 8 zu lösen. Das Gerät 3 kann mit der Motorwelle verbunden bleiben, wenn das Lüftungsgitter 2 bei ausreichend großer zentraler Öffnung 7 über das Gerät 3 gezogen werden kann. Die Befestigungsvorrichtung 4 bleibt in diesem Fall am Gerät 3 befestigt. Das Lüftungsgitter 2 kann somit einfach und ohne Ausbau der Befestigungsvorrichtung demontiert werden.

Die Befestigungsvorrichtung 4 verbindet das Lüftungsgitter 2 und das Gerät 3 elektrisch leitend miteinander.

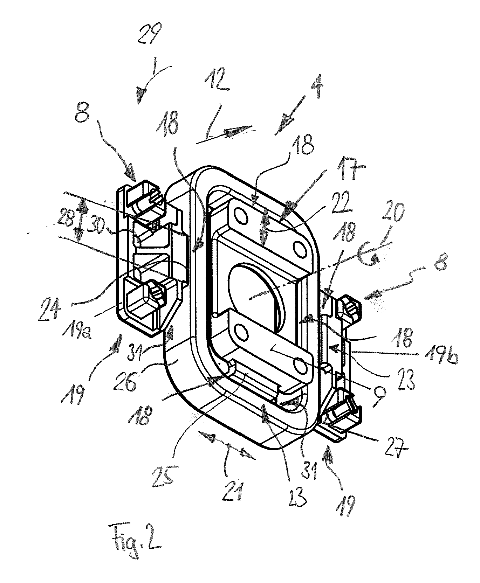

Die Fig. 2 bis 4 zeigen beispielhafte Ausführungsformen von Befestigungsvorrichtungen 4, die der Einfachheit halber jeweils ohne Lüftungsgitter 2 und Gerät 3 dargestellt sind.

Fig. 2 zeigt eine Befestigungsvorrichtung 4, die als Guss-, insbesondere Spritzgussteil ausgestaltet ist. Bevorzugt ist die Befestigungsvorrichtung 4 hierbei aus einem Kunststoff, insbesondere einem elektrisch leitenden oder einem metallisierten Kunststoff gefertigt.

Die Befestigungsvorrichtung weist wenigstens ein Flanschelement 17 auf, das über Gelenkstellen 18 mit wenigstens einem Befestigungselement 19 verbunden ist. Wie zu erkennen ist, können auch zwei laschenförmige Befestigungselemente 19 an gegenüberliegenden Seiten der Befestigungsvorrichtung 4 vorhanden sein. Das Flanschelement 17 weist an seiner Flanschfläche ein Flanschgesicht auf, das die Befestigung standardisierter geräteseitiger Flansche ermöglicht.

Das Befestigungselement 19 dient zur Befestigung der Befestigungsvorrichtung am Lüftungsgitter 2 (vgl. Fig. 1). Hierzu kann es mit Befestigungsmitteln 8 versehen sein, wie sie oben bei Fig. 1 beschrieben sind.

Das Befestigungselement 19 und das Flanschelement 17 können mehrteilig ausgestaltet sein. Beispielsweise kann das Befestigungselement 19 zwei sich gegenüberliegende Befestigungslaschen 19a und 19b aufweisen.

Die Gelenkstellen 18 verbinden das Befestigungselement 19 mit dem Flanschelement 17 bezüglich einer Drehung um eine Drehachse 20 drehstarr. Die Drehachse 20 verläuft parallel zu oder ist identisch mit der Drehachse der Motorwelle (nicht gezeigt). Senkrecht zur Drehachse 20 ist das Flanschelement 17 gegenüber dem Befestigungselement 19 vorzugsweise rein translatorisch auslenkbar, wie durch die Pfeile 21, 22 angedeutet ist. Das Flanschelement ist kardanisch an dem wenigstens einem Befestigungselement 19 aufgehängt, indem die Gelenkstellen 18 in Paaren kreuzweise zueinander angeordnet sind.

Die Gelenkstellen können Filmscharniere 24, insbesondere ein Paar von beabstandeten Filmscharnieren aufweisen. Die Filmscharniere 24 können durch ein feder- bzw. stegartiges Verbindungselement 25 miteinander verbunden sein. Die Filmscharniere 24 einer Gelenkstelle 18 sind insbesondere in Richtung der Drehachse 20 voneinander beabstandet. In dieser Ausgestaltung bildet ein Paar von Gelenkstellen eine Parallelfederführung.

Zwischen dem Flanschelement 17 und dem Betätigungselement 19 kann ein Zwischenrahmen 26 vorhanden sein, an dem die Gelenkstellen 18 jeweils paarweise sowohl flanschelementseitig als auch befestigungselementseitig angeordnet sind. Die flanschseitigen Gelenkstellen 18 sind dabei gegenüber den befestigungselementseitigen Gelenkstellen 18 um 90° gedreht am Zwischenrahmen 26 angeordnet.

Der Zwischenrahmen 26 umgibt bevorzugt geschlossen das wenigstens eine Flanschelement 17. Er befindet sich in Einsteckrichtung 12 zwischen der Flanschfläche 9, an der das Gerät 3 zu liegen kommt (vgl. 1) und einer Befestigungsfläche 27, an der im montierten Zustand das Lüftungsgitter 2 aufliegt. Insbesondere kann die Flanschfläche 9 in Steckrichtung 12 von der Befestigungsfläche 27 beabstandet sein. Bei einer Montage von der dem Gerät 3 abgewandten Seite des Lüftungsgitters 2 sind die Befestigungsfläche 27 und die Flanschfläche 9 auf derselben Seite der Befestigungsvorrichtung 4 angeordnet.

Aufgrund der kardanischen Aufhängung des wenigstens einen Flanschelements 17 an dem wenigstens einen Befestigungselement 19 ist das Flanschelement gegenüber dem Befestigungselement ausschließlich rein translatorisch auslenkbar. In einer gegenüber einer Ausgangsstellung ausgelenkten Stellung verlaufen die Befestigungsfläche 27 und die Flanschfläche 9 parallel zu ihrer jeweiligen Ausrichtung in der Ausgangsstellung. Jedem Gelenkpaar ist dabei die parallele bzw. translatorische Auslenkung in einer Richtung zugeordnet. So bilden die Gelenkstellen zwischen dem Befestigungselement 19 und dem Zwischenrahmen 26 eine Parallelführung für die translatorische Auslenkung in Richtung der Pfeile 21 und die Gelenkstellen 19 zwischen dem Zwischenrahmen 26 und dem Flanschelement 17 eine Parallelführung für die translatorische Auslenkung entlang des Pfeils 22, die senkrecht zum Pfeil 21 verläuft. Hierdurch ist eine kardanische Struktur gebildet.

Der Zwischenrahmen 26 bildet vorzugsweise einen geschlossenen Rahmen. Es bietet sich an, aus Gründen der Torsionssteifigkeit und des Gewichts den Zwischenrahmen 26 mit einem T- oder U-förmigen Querschnitt auszugestalten.

Die Torsionssteifigkeit wird ferner dadurch positiv beeinflusst, dass die Gelenkstellen 18, insbesondere die Filmscharniere als deren strukturell schwächsten Komponenten, eine große Längserstreckung in einer Umfangsrichtung 29 aufweisen. Die Längserstreckung ist insbesondere größer als der Abstand der jeweiligen Filmscharniere einer Gelenkstelle 18 voneinander.

Schließlich ist in Fig. 2 noch zu erkennen, dass die Befestigungsvorrichtung 4 Durchbrüche 30 sowie an den Zwischenrahmen 26 angrenzende Lüftungsschlitze 31 aufweist. Die Durchbrüche 30 und der Lüftungsschlitz 31 nehmen bevorzugt zusammen wenigstens 20 % der Grundfläche der Befestigungsvorrichtung 4 ein. So ist sichergestellt, dass auch durch die Befestigungsvorrichtung 4 hindurch eine ausreichende Kühlung des Elektromotors stattfinden kann.

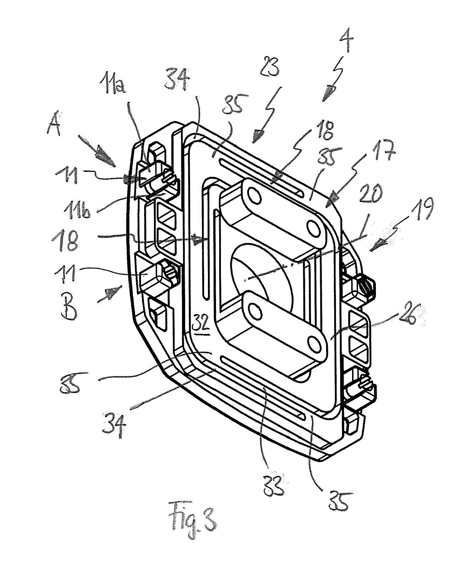

In der Befestigungsvorrichtung 4 der Fig. 3 ist das Flanschelement 17 ebenfalls über eine kardanische Struktur 23 am Befestigungselement 19 aufgehängt. Wie bei der Fig. 2 ist das Befestigungselement 19 rahmenförmig ausgestaltet. Allerdings liegen die Gelenkstellen 18 in einer Ebene 32 senkrecht zur Drehachse 20.

Die Gelenkstellen 18 der Fig. 3 bilden Parallelfederführungen, deren Federn 33 sich bezüglich der Drehachse 20 radiusparallel erstrecken. Die Federn 33 sind von Schlitzen 34 begrenzt, die sich jeweils von einem Ende 35 einer Feder 33 zum Ende 35 einer anderen Feder erstrecken. Bei der Ausführungsform der Fig. 3 erstrecken sich solche Schlitze 34 jeweils paarweise zwischen zwei gegenüberliegenden Gelenkstellen 18.

Die Schlitze 34 dienen gleichzeitig als Kühlungsöffnungen.

Auch bei der Ausführungsform der Fig. 3 sind die flansch- und befestigungselementseitigen Gelenkstellen jeweils am Zwischenrahmen 26 angeordnet. Im Unterschied zur Ausführungsform der Fig. 2 ist jedoch der Zwischenrahmen 26 im Wesentlichen scheibenförmig.

In der in Fig. 3 dargestellten Ausgestaltung ist eine Fertigung im Guss- oder Spritzgussverfahren möglich. Die Schlitze 33 können jedoch auch durch Materialabtrag, beispielsweise durch Laserschneiden, gefertigt werden.

Das Klemmorgan 11 in der Position A der Fig. 3 befindet sich in der Einsteckrichtung, während sich das Klemmorgan 11 in der Position B in der Klemmstellung befindet und aufgespreizt ist. Das Spreizorgan 16 ist in der Klemmstellung gegenüber der Einsteckrichtung verdreht, so dass die Spreizteile 11a, 11 b des Klemmorgans vorzugsweise elastisch auseinandergedrückt sind.

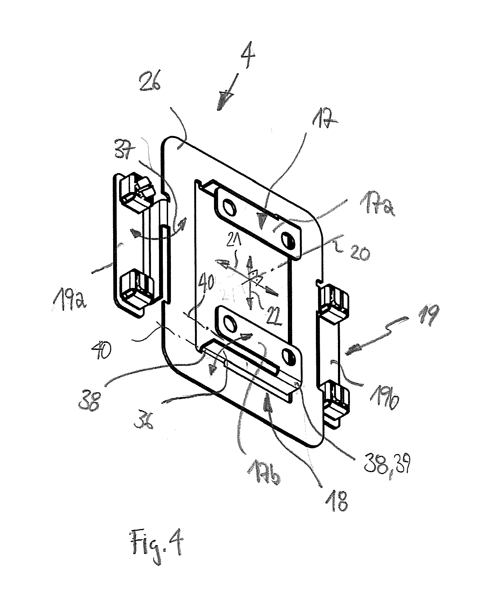

Fig. 4 zeigt eine Ausführungsform, die nicht nur als Guss-, sondern auch als Stanzteil, insbesondere aus Blech, gefertigt sein kann.

Das Flanschelement 17 und das Befestigungselement 19 der Befestigungsvorrichtung 4 sind jeweils zweiteilig mit Flanschlaschen 17a, 17b und Befestigungslaschen 19a, 19b ausgestaltet. Im montierten Zustand sind die beiden Teile 19a und 19b jeweils durch die Frontplatte 9 des Geräts 3 und das Lüftungsgitter 2 starr miteinander verbunden.

Die Gelenkstellen 18 erlauben bei dieser Ausgestaltung nicht nur eine rein translatorische Auslenkung entlang der Pfeile 21, 22 von Flanschelement 17 und Befestigungselement 19 relativ zueinander, sondern auch zueinander senkrechte Kippbewegungen 36, 37 jeweils um diese beiden Auslenkungsrichtungen herum, also jeweils senkrecht zur Drehbewegung um die Drehachse 20. Die Drehbewegung 36, 37 einer jeden Gelenkstelle 18 findet dabei um die jeweils von dieser Gelenkstelle 18 ermöglichte translatorische Ausgleichsbewegung 22, 21 statt.

Die Gelenkstellen 18 sind wie bei den vorangegangenen Ausführungsbeispielen auch materialschlüssig mit dem Flanschelement 17, dem Zwischenrahmen 26 und dem Befestigungselement 19 ausgebildet. Die translatorische Ausgleichbewegung findet in den beiden voneinander beabstandeten Biege- bzw. Knickstellen 38 einer Gelenkstelle 18 statt, die scharnierförmige Gelenke 39 ähnlich den Filmscharnieren 24 (vgl. Fig. 2) bilden. Um die rotatorische Ausgleichsbewegung 36, 37 zu ermöglichen, sind die Gelenke 39 in Richtung ihrer jeweiligen Rotationsachsen 40 voneinander beabstandet. Sie sind zudem in dieser Richtung deutlich kürzer als die entsprechenden Gelenke beispielsweise der Ausführungsform nach Fig. 2 und überlappen sich in Richtung der Drehachse 20 nicht.

## Patentansprüche

1. Befestigungsvorrichtung (4) zur Anbringung eines eine Drehbewegung um eine Drehachse (20) überwachenden Geräts (3) an einem Lüftungsgitter (2) eines Elektromotors mit einem an dem Gerät (3) befestigbar ausgestalteten Flanschelement und mit einem an dem Lüftungsgitter (2) befestigbar ausgestalteten Befestigungselement (19), wobei das Flanschelement (17) und das Befestigungselement (19) über Gelenkstellen (18) bezüglich der Drehbewegung starr und senkrecht zur Drehachse (20) relativ zueinander auslenkbar verbunden sind, **dadurch gekennzeichnet, dass** das Befestigungselement (19) wenigstens ein Befestigungsmittel (8) aufweist, welches als ein Klemmorgan (11) ausgebildet ist und von einer Einsteckstellung entlang einer Einsteckrichtung (12) in die Öffnung (10) des Lüftungsgitters (2) einsteckbar ist,
wobei an einem freien Ende des Klemmorgans (11) ein exzentrischer Klemmkopf ausgebildet ist, wodurch das Klemmorgan (11) aus der Einsteckstellung in eine Klemmstellung bewegbar ist, wobei das Klemmorgan (11) in der Klemmstellung kraftschlüssig mit dem Lüftungsgitter (2) in Eingriff bringbar ist und eine Breitenabmessung (13) senkrecht zur Einsteckrichtung (12) gegenüber der Einsteckstellung vergrößert ist.

2. Befestigungsvorrichtung (4) nach Anspruch 1, **dadurch gekennzeichnet, dass** das Klemmorgan (11) ausgestaltet ist, bei einer Drehung des Klemmkopfes die Breitenabmessung (13) zu vergrößern

3. Befestigungsvorrichtung (4) nach einem der vorhergehenden Ansprüche, **dadurch gekennzeichnet, dass** der Klemmkopf an seiner dem Lüftungsgitter zugewandten Unterseite mit einem Klemmvorsprung versehen ist.

4. Befestigungsvorrichtung (4) nach einem der vorhergehenden Ansprüche, **dadurch gekennzeichnet, dass** das Flanschelement (17) an dem Befestigungselement (19) über die Gelenkstellen (18) kardanisch aufgehängt ist.

5. Befestigungsvorrichtung (4) nach einem der Ansprüche 1 bis 3, **dadurch gekennzeichnet, dass** das Flanschelement (17) gegenüber dem Befestigungselement (19) durch die Gelenkstellen (18) translatorisch geführt ist.

6. Befestigungsvorrichtung (4) nach Anspruch 4 oder 5, **dadurch gekennzeichnet, dass** wenigstens ein Paar von Gelenkstellen (18) eine Parallelfederführung bildet.

7. Befestigungsvorrichtung (4) nach einem der vorhergehenden Ansprüche, **dadurch gekennzeichnet, dass** die Gelenkstellen (18) einstückiger Teil des Flanschelements (17) und/oder des Befestigungselements (19) sind.

8. Befestigungsvorrichtung (4) nach einem der vorhergehenden Ansprüche, **dadurch gekennzeichnet, dass** die Gelenkstellen (18) scharnierförmige Gelenke (39) an Biegestellen (38) aufweisen.

9. Befestigungsvorrichtung (4) nach einem der vorhergehenden Ansprüche, **dadurch gekennzeichnet, dass** die Befestigungsvorrichtung (4) einstückig gefertigt ist.

10. Befestigungsvorrichtung (4) nach einem der vorhergehenden Ansprüche, **dadurch gekennzeichnet, dass** zwischen dem Flanschelement (17) und dem Befestigungselement (19) ein Zwischenrahmen (26) angeordnet ist, der über die Gelenkstellen (18) mit dem Flanschelement (17) und dem Befestigungselement (19) verbunden ist.

11. Befestigungsvorrichtung (4) nach einem der vorhergehenden Ansprüche, **dadurch gekennzeichnet, dass** das Flanschelement (17) innerhalb des Zwischenrahmens (26) angeordnet ist.

12. Befestigungsvorrichtung (4) nach einem der vorhergehenden Ansprüche, **dadurch gekennzeichnet, dass** das Flanschelement (17) und das Befestigungselement (19) elektrisch leitend miteinander verbunden sind.

13. Anordnung (1) mit einem Lüftungsgitter (2), einem Gerät (3) zur Überwachung einer Drehbewegung und einer Befestigungsvorrichtung (4), durch die das Gerät (3) am Lüftungsgitter (2) befestigbar ist, **dadurch gekennzeichnet, dass** die Befestigungsvorrichtung (4) nach einem der Ansprüche 1 bis 12 ausgestaltet ist.

14. Anordnung (1) nach Anspruch 13, **dadurch gekennzeichnet, dass** die Befestigungsvorrichtung (4) an der dem Gerät (3) abgewandten Seite des Lüftungsgitters (2) anbringbar ausgestaltet ist.

15. Anordnung (1) nach Anspruch 13 oder 14, **dadurch gekennzeichnet, dass** das Lüftungsgitter (2) bei auf der Befestigungsvorrichtung (4) montiertem Gerät (3) über das Gerät (3) gezogen werden kann.

## Claims

1. Mounting device (4) for attaching a device (3) monitoring a rotary motion around an axis of rotation (20) on a ventilation grille (2) of an electric motor with a flange element designed so that it can be mounted on the device (3) and with a mounting element (19) designed so that it can be mounted on the ventilation grille (2), whereby the flange element (17) and the mounting element (19) are connected to each other through articulation points (18) rigidly and vertically with respect to the rotary motion in relation to the axis of rotation (20) and are capable of articulation with respect to each other, **characterized in that** the mounting element (19) has at least one mounting means (8) which is designed as a clamping organ (11) and which can be plugged into the opening (10) of the ventilation grille (2) from a plug-in position along a plug-in direction (12), whereby an eccentric clamping head is formed at one free end of the clamping organ (11), through which the clamping organ (11) can be moved out of the plug-in position into a clamping position, whereby the clamping organ (11) in clamping position can be brought into frictional engagement with the ventilation grille (2) and a width (13) is enlarged vertically with respect to the plug-in direction (12) compared to the plug-in position.

2. Mounting device (4) in accordance with Claim 1, **characterized in that** the clamping organ (11) is designed in such a way that when the clamping head is rotated, the width (13) is enlarged.

3. Mounting device (4) in accordance with one of the above Claims, **characterized in that** the clamping head is equipped with a clamping lug on its underside facing the ventilation grille.

4. Mounting device (4) in accordance with one of the above Claims, **characterized in that** the flange element (17) is gimbal mounted on the mounting element (19) above the articulation points (18).

5. Mounting device (4) in accordance with one of the Claims 1 to 3, **characterized in that** the flange element (17) opposite the mounting element (19) is translationally guided through the articulation points (18).

6. Mounting device (4) in accordance with Claim 4 or 5, **characterized in that** at least one pair of articulation points (18) forms a parallel spring guide.

7. Mounting device (4) in accordance with one of the above Claims, **characterized in that** the articulation points (18) are a single-piece component of the flange element (17) and/or of the mounting element (19).

8. Mounting device (4) in accordance with one of the above Claims, **characterized in that** the articulation points (18) have hinge-shaped joints (39) at bending points (38).

9. Mounting device (4) in accordance with one of the above Claims, **characterized in that** the mounting device (4) is produced as one piece.

10. Mounting device (4) in accordance with one of the above Claims, **characterized in that** an intermediate frame (26) is located between the flange element (17) and the mounting element (19), said frame being connected with the flange element (17) and the mounting element (19) through the articulation points (18).

11. Mounting device (4) in accordance with one of the above Claims, **characterized in that** the flange element (17) is located within the intermediate frame (26).

12. Mounting device (4) in accordance with one of the above Claims, **characterized in that** the flange element (17) and the mounting element (19) are connected to each other so that they conduct electricity.

13. Arrangement (1) with a ventilation grille (2), a device (3) for monitoring a rotary motion and a mounting device (4) through which the device (3) can be mounted on the ventilation grille (2), **characterized in that** the mounting device (4) is designed in accordance with one of the Claims 1 to 12.

14. Arrangement (1) in accordance with Claim 13, **characterized in that** the mounting device (4) is designed so that it can be mounted on the side of the ventilation grille (2) facing away from the device (3).

15. Arrangement (1) in accordance with Claim 13 or 14, **characterized in that** the ventilation grille (2) can be drawn over the device (3) when the device (3) is mounted on the mounting device (4).

## Revendications

1. Dispositif de fixation (4) permettant de fixer un appareil (3) de surveillance d'un mouvement de rotation autour d'un axe de rotation (20) à une grille de ventilation (2) d'un moteur électrique avec un élément à bride pouvant être fixé à l'appareil (3) et avec un élément de fixation (19) pouvant être fixé à la grille de ventilation (2), l'élément à bride (17) et l'élément de fixation (19) étant raccordés l'un à l'autre de manière articulable par le biais de points d'articulation (18) par rapport au mouvement de rotation de manière fixe et perpendiculaire à l'axe de rotation (20), **caractérisé en ce que** l'élément de fixation (19) présente au moins un moyen de fixation (8), conçu sous la forme d'un organe de serrage (11) et insérable depuis une position d'insertion le long d'une direction d'insertion (12) dans l'ouverture (10) de la grille de ventilation (2), une tête de serrage excentrique étant conçue à une extrémité libre de l'organe de serrage (11), l'organe de serrage (11) pouvant par le biais de ladite tête de serrage se déplacer de la position d'insertion à une position de serrage, l'organe de serrage (11) pouvant être mis en prise par force avec la grille de ventilation (2) dans la position de serrage et une dimension en largeur (13) étant agrandie de manière perpendiculaire à la direction d'insertion (12) par rapport à la position d'insertion.

2. Dispositif de fixation (4) selon la revendication 1, **caractérisée en ce que** l'organe de serrage (11) est conçu pour agrandir la dimension en largeur (13) en cas de rotation de la tête de serrage.

3. Dispositif de fixation (4) selon l'une des revendications précédentes, **caractérisé en ce que** la tête de serrage est pourvue d'une saillie de serrage sur sa face inférieure tournée vers la grille de ventilation.

4. Dispositif de fixation (4) selon l'une des revendications précédentes, **caractérisé en ce que** l'élément à bride (17) est suspendu par joint à Cardan à l'élément de fixation (19) via les points d'articulation (18).

5. Dispositif de fixation (4) selon l'une des revendications 1 à 3, **caractérisé en ce que** l'élément à bride (17) est guidé en translation par rapport à l'élément de fixation (19) à travers les points d'articulation (18).

6. Dispositif de fixation (4) selon la revendication 4 ou 5, **caractérisé en ce qu**'au moins une paire de points d'articulation (18) forme un guidage de ressort parallèle.

7. Dispositif de fixation (4) selon l'une des revendications précédentes, **caractérisé en ce que** les points d'articulation (18) représentent une partie monobloc de l'élément à bride (17) et/ou de l'élément de fixation (19).

8. Dispositif de fixation (4) selon l'une des revendications précédentes, **caractérisé en ce que** les points d'articulation (18) présentent des articulations en forme de charnière (39) au niveau des points de pliage (38).

9. Dispositif de fixation (4) selon l'une des revendications précédentes, **caractérisé en ce que** le dispositif de fixation (4) est réalisé d'une seule pièce.

10. Dispositif de fixation (4) selon l'une des revendications précédentes, **caractérisé en ce qu**'entre l'élément à bride (17) et l'élément de fixation (19) est disposé un cadre intermédiaire (26), qui est raccordé à l'élément à bride (17) et à l'élément de fixation (19) via les points d'articulation (18).

11. Dispositif de fixation (4) selon l'une des revendications précédentes, **caractérisé en ce que** l'élément à bride (17) est disposé à l'intérieur du cadre intermédiaire (26).

12. Dispositif de fixation (4) selon l'une des revendications précédentes, **caractérisé en ce que** l'élément à bride (17) et l'élément de fixation (19) sont raccordés électriquement l'un à l'autre.

13. Agencement (1) avec une grille de ventilation (2), un appareil (3) destiné à surveiller un mouvement de rotation et un dispositif de fixation (4), par le biais duquel l'appareil (3) peut être fixé à la grille de ventilation (2), **caractérisé en ce que** le dispositif de fixation (4) est conçu selon l'une des revendications 1 à 12.

14. Agencement (1) selon la revendication 13, **caractérisé en ce que** le dispositif de fixation (4) peut être fixé sur la face de la grille de ventilation (2) opposée à l'appareil (3).

15. Agencement (1) selon la revendication 13 ou 14, **caractérisé en ce que** la grille de ventilation (2) peut être tirée par le biais de l'appareil (3) lorsque l'appareil (3) est monté sur le dispositif de fixation (4).
